# EUROPEAN PATENT SPECIFICATION

(11) **EP 1 312 541 B1**
(45) Date of publication and mention of the grant of the patent: **19.12.2007**
(21) Application number: 02024145.1
(22) Date of filing: 30.10.2002
(51) Int. Cl.: B62K 23/06, B62M 25/08, B62M 25/04

(54) **Gear-change control device for a bicycle**
Steuervorrichtung für eine Fahrradschaltvorrichtung
Dispostif de commande pour changement de vitesses de transmission de bicyclette

(30) Priority: 16.11.2001 IT TO20011079
(43) Date of publication of application: 21.05.2003
(73) Proprietor: Campagnolo Srl, 36100 Vicenza (VI) (IT)
(72) Inventor: Dal Pra', Giuseppe, 36100 Zané (Vicenza) (IT)
(74) Representative: Castiglia, Paolo

(56) References cited:
- EP-A- 0 361 335
- US-A- 5 480 356
- US-A- 5 755 139
- US-A- 5 832 782

## Description

The present invention relates to gear-change control devices for bicycles, particularly for bicycles having a so-called "straight" handlebar.

In the present description and in the following claims, reference is made to straight handlebars as opposite to handlebars having dropped end portions of the type normally used in race bicycles. The straight handlebars have end hand-grips extending substantially along a horizontal direction orthogonal to the longitudinal symmetry plane of the handlebar. Handlebars of this type are usually employed for example on city bicycles, mountain bikes and touring bicycles, these latter being intended as bicycles generally having the features of a race bicycle, but provided with a straight handlebar rather than a conventional handlebar with dropped end portions.

Gear change control devices are already known, particularly for bicycles having straight handlebar, comprising a support which can be fixed to the handlebar, a first gear change control member and a second gear change control member, wherein said first control member is pivotably mounted on said support and has a control portion which, in the mounted condition of said device on said handlebar, is movable forwardly in the longitudinal direction of the bicycle from a rest position to an operative position

In a first category of devices of the above indicated type, both the first and second gear change control members are arranged so as to have their respective control portions both movable below the handlebar (see for example EP 0 361 335 B1 which constitutes the closest prior art), and both arranged to be operated by the cyclist by pushing them forwardly in the longitudinal direction of the bicycle, with the thumb of the hand which grips the adjacent handgrip of the handlebar. However, some of the above mentioned known devices are not completely easy to use since, although enabling actuation of the gear change without requiring that the hand is moved away from the handgrip on the handlebar, anyway they involve a variation of the position of the hand on the handlebar, depending upon whether one desires to actuate the first or the second gear change control members.

A further drawback of the known devices of the above indicated type lies in that if the cyclist actuates the gear change without turning his eyes away from the road, it may happen that he actuates one control member instead of the other.

Devices are also known which are substantially similar to the known devices indicated above, in which however only one of the two control members is actuated by pushing it forwardly, whereas the other control member is formed by a lever whose control end is located ahead of the handlebar with reference to the longitudinal direction of the bicycle and is actuated by pulling it backwardly with the fore finger and/or the middle finger of the hand, while the other lever is always actuated by pushing it forwardly with the thumb (see for example EP-A-0 785 128). The devices of this type are not completely convenient in use, since it is generally preferable that both control members are actuated by pushing them forwardly with the thumb.

In order to overcome all the above mentioned drawbacks, the invention provides a gear change control device as claimed in claim 1.f

Further preferred features of the control device of the invention are specified in the annexed claims.

Due to the above mentioned features, the control device according to the invention is extremely better in use with respect to the known devices which have been described above. In the preferred embodiment, the control portions of both control members can be controlled by pushing them forwardly with the thumb with no need of changing the position of the hand on the handgrip of the handlebar, depending upon whether one member or the other must be actuated. It is indeed possible to reach both the control members by holding the hand in the same position and moving only the thumb.

Furthermore, since the control portion of one or both of the two control members is at least partially located so that it lies substantially at the same level of the handlebar with respect to a vertical direction (i.e. substantially neither above nor below the handlebar), and behind thereof, an easy reference of the position of this member and hence of the position of the other member is provided, so that the risk is very reduced if not nullified at all that the cyclist may inadvertently actuate one member instead of the other when he controls the gear change without moving his eyes away from the road.

The above mentioned first and second control members control a bicycle derailleur, which can be a rear derailleur or a front derailleur.

In one embodiment, the above mentioned first and second control members control an actuating mechanism carried by the above mentioned support and connected to the derailleur through a flexible cable.

In a variant, the above mentioned first and second control members control switches carried by said support and forming part of an electronic device controlling an actuator for the derailleur, which can be made for example according to the teachings of US-A-5,480,356 and corresponding DE-C-19 50 283 and FR-A-2.716.430 of the same applicant.

According to a further preferred feature of the invention, the above mentioned support for the gear change control device is integrated into a support to which a brake actuating lever is articulated.

In the case that the two control members control an actuating mechanism, the preferred embodiment has the first and second control members both constituted by pivotable levers which return to their rest or home position after being operated. Also in the preferred embodiment, the first control member is a release control member adapted to control a release mechanism, i.e. a mechanism which temporarily leaves a derailleur control cable free to move under the action of spring means associated to the derailleur. Release mechanism of this type have been known and used since a long time in gear-change control devices for bicycles (see for example GB-A-2.012.893. Due to this feature, the operative stroke of the first control member is reduced, so that there is no hindrance to the proper operation of the device for that the member is arranged at a position substantially at the same level of the handlebar and is actuated by pushing it forwardly towards this end portion of the handlebar. On the contrary, the further advantage is obtained that the handlebar acts as a stop element with respect to the first and or second control member, thus avoiding any risk of undue forces being applied to the mechanism controlled by the first and or second control member.

Further features and advantages of the invention will become apparent from the description which follows with reference to the annexed drawings, given purely by way of non limiting example, in which:
- figure 1 is a perspective view which shows a right end portion of a straight handlebar of a bicycle, provided with an integrated gear change and brake control unit, incorporating the device according to the invention,
- figures 2, 3 are a rear view (with reference to the direction of movement of the bicycle) of the unit of figure 1, which shows the possibility of actuating both control levers while holding the hand in the same position on the handgrip of the handlebar and changing only the position of the thumb,
- figure 4 is a bottom view of the unit of figure 1, with both control levers in a neutral position,
- figure 5, 6 are variants of figure 4 which shows the operative position of the first and second control levers, and
- figures 7,8 show two further variants viewed from behind, in the longitudinal direction of the bicycle.

In the drawing, reference numeral 1 indicates a right end portion of a straight handlebar of a bicycle provided with a handgrip 2. The end portion 1 has a tubular body on which an integrated unit 3 is mounted for controlling the brake and gear change. The integrated unit 3 includes a gear change control device comprising a support 4 which incorporates a clamp portion 5 connected to the handlebar 1 in a way known per se. The support 4 is used also for pivotably supporting a brake lever 6 which controls the respective brake of the bicycle by means of a flexible cable, house sheath is designated by 7.

The gear change control device controls a derailleur of the bicycle, such as the rear derailleur, by means of another flexible cable, whose sheath is designated by 8. The sheaths 7, 8 are connected in a way known per se by adjusting threaded elements 9, 10 to the body of support 4. The latter has a hollow structure and contains a mechanism for actuating the derailleur through a flexible cable which passes through sheath 8 (not shown). The actuating mechanism of the derailleur can be made in any known way. It can be controlled by a control lever 11, having an actuating end portion 12 and a control lever 13, having an actuating end portion 14. Lever 11 is used for controlling gear change by shifting the bicycle chain on the sprocket assembly associated to the rear wheel of the bicycle towards the larger sprockets. The lever 13 is instead used for controlling the gear change by chain shift towards smaller rear sprockets. In case of a front derailleur, the lever 11 causes chain shift towards larger chain-rings, whereas lever 13 causes chain shift towards smaller chain-rings.

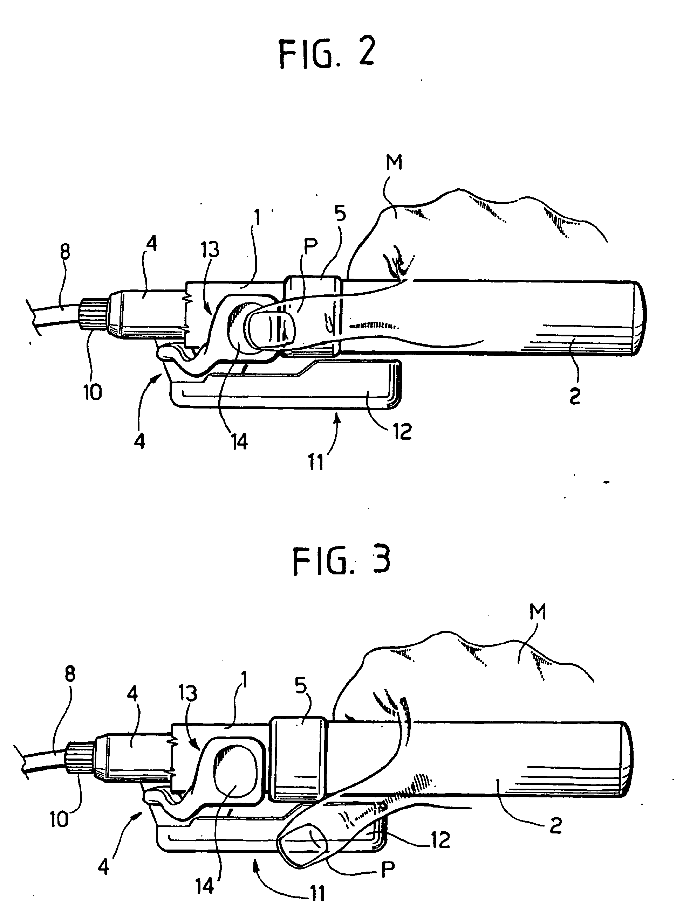

As clearly shown in figures 2, 3 both levers 11, 13 are pivotably mounted below the support 4, and below the end portion 1 of the handlebar. The lever 11 extends entirely immediately below the end portion 1, adjacent thereto, whereas the lever 13 is curved upwardly so as to have an actuating end portion 14 which is substantially facing the end portion 1 of the handlebar and is located immediately behind it, with reference to the direction of movement of the bicycle, so that the operative path of portion 14 interferes with the handlebar.

Figure 2, 3 clearly show how both control portions 12, 14 can be reached by the thumb P of the hand M with no need to change the position of the hand of the handgrip 2.

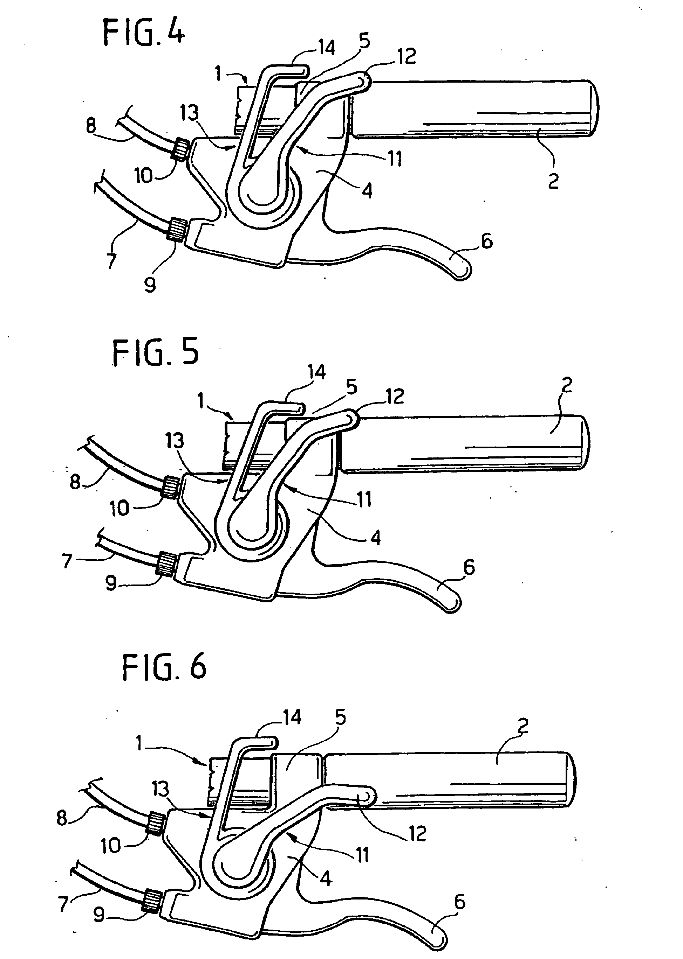

Figure 4, 5, 6 respectively show both levers in their rest position (figure 4), lever 13 in its operative position and lever 11 in its rest position (fig. 5) and lever 13 in its rest position and lever 11 in its operative position (fig. 6).

As shown, the operative stroke available for lever 14 is reduced. As a consequence of this, lever 13 is particularly useful for temporarily releasing the mechanism in order to allow for a movement of the derailleur due to the biasing action of the spring associated thereto. Lever 11 may be provided for having a longer operative stroke for causing, through the flexible actuating cable, the movement of the derailleur against the action of the return spring associated thereto. In other words, the lever 13 may be a lever of the so called "release" type which acts for temporarily unlocking the mechanism in order to allow for a movement of the derailleur under the action of its return spring. In this particular solution, the active control portion 14 can be provided immediately adjacent to the handlebar 1, and the latter can act as a stop element for lever 13, so as to prevent undesired stresses on the mechanism or on the lever itself, which is advantageous above all in the case that the lever is made of plastic material and hence subjected to the risk of ruptures in the case of an excessive deformation. In other solutions, between the control portion 14 of the lever 13 and the handlebar 1, it is possible to leave enough space to allow the lever 13 to actuate other kinds of mechanisms.

Naturally, while the principle of the invention remains the same, the details of construction and the embodiments may widely vary with respect to what has been described and illustrated purely by way of example, without departing from the scope of the present invention.

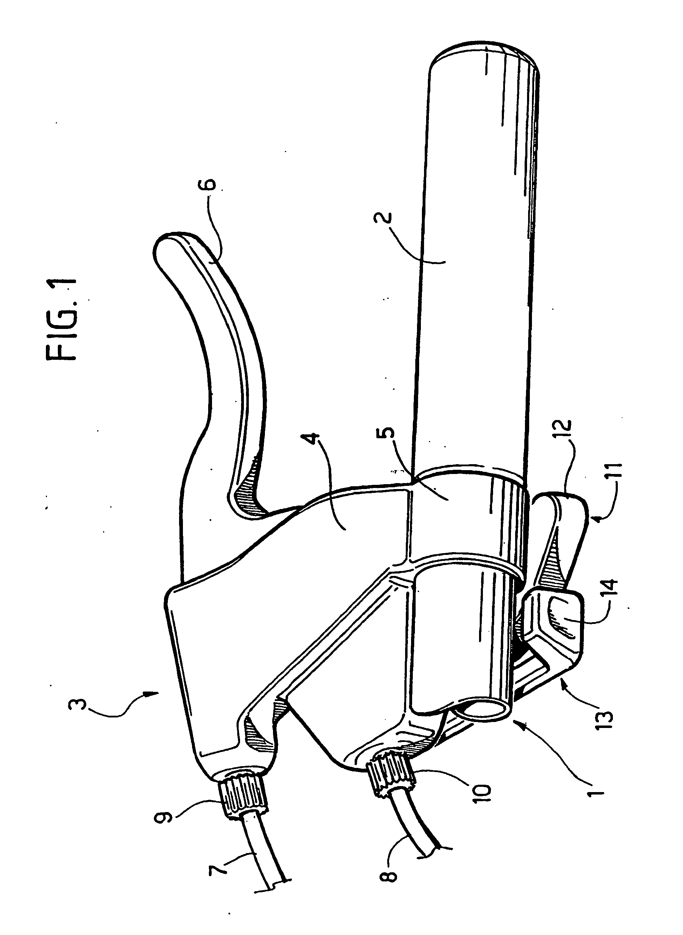

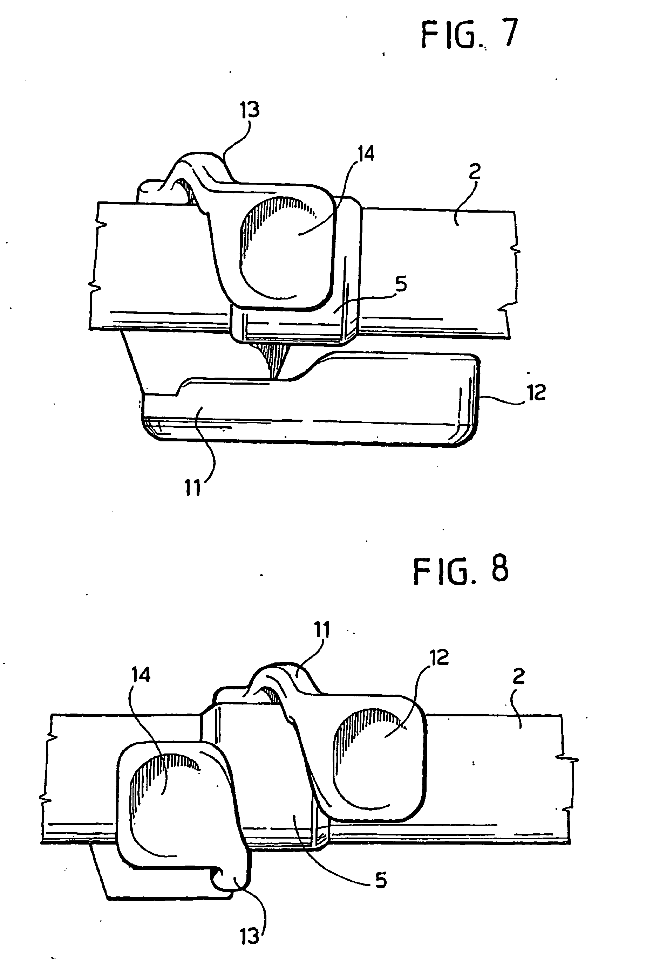

For example, one or both the levers 11, 13 can be pivotably mounted on the upper side of the support 4, and above the end portion 1 of the handlebar. The lever 11 can extend entirely immediately above the end portion 1, adjacent thereto, whereas the lever 13 can be curved downwardly so as to have the actuating end portion 14 substantially facing the end portion 1 of the handlebar and located immediately behind it. Fig. 7 of the accompanying drawings shows an embodiment where lever 13 has this arrangement, whereas lever 11 is arranged below the handlebar as in the case of figures 1-5. In this embodiment, both levers can be rotated towards their operative positions in an anti-clockwise direction, when viewed from the above, and considering the case of a device mounted close to the right handgrip of the handlebar. Obviously, in case of the device being mounted close to the left handgrip, the arrangement would be reversed, with both levers rotating in a clockwise direction when moved towards theor operative positions.

Further, one or both the levers 11, 13 can be arranged in such a way that, when the respective control portions 12, 14 are activated by the thumb of the cyclist, they go away from the hand of the cyclist, gripping the handlebar. For example, figure 8 shows an embodiment of this type, for the case of a device mounted close to the right handgrip of the handlebar. In this case, lever 11 moves towards its operative position by an anti-clockwise rotation, when viewed from the above, whereas lever 13 moves towards its operative position by a clockwise rotation (obviously the situation would be reversed for a device mounted close to the left handgrip).

Finally, as shown in Fig. 8, also the second lever 11 can be arranged in such a way as to present the actuating end portion 12 substantially at the same level and facing the handlebar 1. In the case of the embodiment of fig. 8, lever 11 is arranged above the handlebar and has a downwardly extending portion defining control portion 12, whereas lever 13 is arranged below the handlebar and has an upwardly extending portion defining the control portion 14. As already indicated, it would be equally possible to arrange both levers above the handlebar.

## Claims

1. A gear change control device for a bicycle having a handlebar (1), comprising a support (4) which can be fixed to the handlebar (1), a first gear change control member (13) and a second gear change control member (11), said first and second gear change control members (13,11) being pivotably mounted on said support (4) and being movable in respective first and second planes which are substantially parallel to the handlebar (1), wherein the first gear change control member (13) has a first control portion (14) which, in the mounted condition of said device on said handlebar, is movable forwardly in the longitudinal direction of the bicycle from a rest position to an operative position, said first control portion (14) being arranged behind the handlebar with respect to said longitudinal direction, **characterised in that** said first control portion (14) extends at least partially to a point lying substantially at the same level of the handlebar, with respect to a vertical direction in the condition of use of the handlebar.

2. A control device according to claim 1, wherein said first gear change control member (13) is a lever having an end portion extending substantially transversely to said first plane and defining said first control portion (14).

3. A control device according to claim 1, wherein, said first plane lies below the handlebar (1), and said first control portion (14) is defined by an upwardly extending end portion of said lever.

4. A control device according to claim 1, wherein said first plane lies above the handlebar (1), and said first control portion (14) is defined by a downwardly extending end portion of said lever.

5. A control device according to any of claims 1-4, wherein said first control portion (14) is arranged at a position such that it can be operated by pushing it forwardly by the thumb of a hand gripping the handlebar (1).

6. A control device according to any of the previous claims, wherein said first control portion (14) is adapted to return to its rest position after that it has been operated.

7. A control device according to claim 6, wherein said first gear change control member (13) is a release member adapted to control a release mechanism carried by said support (4).

8. A control device according to claim 6, wherein said first gear change control member (13) controls a switch which forms part of an electronic gear change.

9. A control device according to claim 1, wherein said second gear change control member (11) is a lever having an end portion defining a second control portion (12) movable forwardly in the longitudinal direction of the bicycle from a rest position to an operative position.

10. A control device according to claim 9, wherein said second plane lies below the handlebar.

11. A control device according to claim 10, wherein the second control portion (12) is also movable below the handlebar (1).

12. A control device according to claim 9, wherein said second plane lies above the handlebar (1).

13. A control device according to claim 12, wherein the second control portion (12) is also movable above the handlebar (1).

14. A control device according to claim 3, wherein said second gear change control member (11) is a second lever (11) pivotable in a plane lying below the handlebar (1) and having an end portion defining a second control portion (12) movable forwardly in the longitudinal direction of the bicycle from a rest position to an operative position, said second control portion (12) being defined by an upwardly extending end portion of said second lever.

15. A control device according to claim 4, wherein said second gear change control member (11) is a second lever (11) pivotable in a plane lying above the handlebar (1) and having an end portion defining a second control portion (12) movable forwardly in the longitudinal direction of the bicycle from a rest position to an operative position, said second control portion (12) being defined by a downwardly extending end portion of said second lever.

16. A control device according to claim 14 or 15, wherein said second gear change control member (11) controls a switch which forms part of an electronic gear change.

17. A control device according to claim 9, wherein said second control portion (12) is arranged at a position such that it can be operated by pushing it forwardly by the thumb of a hand gripping the handlebar (1).

18. A control device according to claim 17, wherein the control portions (12, 14) of said first and second gear change control members (11, 13) are arranged at positions such that they can both be operated by pushing them forwardly by the thumb of a hand gripping the handlebar, and such that the thumb can switch from one control portion to the other with no need to change the position of the hand on the handlebar.

19. A control device according to claim 9, wherein said second control portion (12) is adapted to return to its rest position after that it has been operated.

20. Control device according to claim 9, wherein both said first and second control portions (14, 12) are adapted to return to their rest position after that they have been operated, said first and second control portions (14, 12) controlling switches which form part of an electronic gear change.

21. Control device according to claim 20, wherein said switches are carried by said support (4).

22. Control device according to claim 1, wherein said first and second gear change control members (13, 11) control a bicycle derailleur which controls shifting of a bicycle chain on a bicycle multiple sprocket or chain-ring assembly.

23. Control device according to claim 22, wherein said first and second gear change control members (13,11) control a bicycle rear derailleur.

24. Control device according to claim 22, wherein said first and second gear change control members (13,11) control a bicycle front derailleur.

25. Control device according to claim 22, wherein said first and second gear change control members control said derailleur through an actuating mechanism carried by said support (4) and connected to the derailleur by means of a flexible cable.

26. Control device according to any of the previous claims, **characterised in that** in said support (4) there is integrated a support for pivotably mounting a brake actuating lever (6).

27. A control device according to claim 22, wherein said first gear change control member (13) controls movements of said derailleur causing shifting of the bicycle chain towards smaller sprockets or chain-rings.

28. A control device according to claim 1, wherein the second gear change control member (11) has a second control portion (12) extending in plane which is inclined with respect to the plane in which the first control portion (14) extends.

29. A control device according to claim 28, wherein said first control portion (14) extends in a plane which is substantially parallel to the handlebar (1) .

30. A control device according to claim 1, wherein said first control portion (14) is located immediately behind the handlebar (1).

31. Integrated gear-change and brake control unit for a bicycle, wherein it includes a device according to any of the previous claims.

32. Bicycle handlebar, having substantially straight end portions substantially aligned along a direction orthogonal to the plane of symmetry of the handlebar, wherein said handlebar is provided with a control device according to any of claims 1-30 mounted adjacent to one of the end portions of the handlebar.

33. Bicycle handlebar according to claim 32 wherein two control devices as set forth in any of claims 1-30 are provided adjacent to said end portions of the handlebar, respectively for controlling the rear derailleur and the front derailleur of a bicycle.

34. Bicycle, **characterized in that** it includes a control device according to any of claims 1-30.

## Patentansprüche

1. Gangschaltungs-Steuervorrichtung für ein Fahrrad, das eine Lenkstange (1) besitzt, die einen Halter (4), der an der Lenkstange (1) befestigt werden kann, ein erstes Gangschaltungs-Steuerelement (13) und ein zweites Gangschaltungs-Steuerelement (11) aufweist, wobei das erste und das zweite Gangschaltungs-Steuerelement (13, 11) schwenkbar an dem Halter (4) befestigt sind und in einer jeweiligen ersten und einer zweiten Ebene bewegbar sind, die im Wesentlichen parallel zu der Lenkstange (1) liegen, wobei das erste Gangschaltungs-Steuerelement (13) einen ersten Steuerabschnitt (14) besitzt, der, in dem montierten Zustand der Vorrichtung an der Lenkstange, nach vorne in der Längsrichtung des Fahrrads von einer Ruhe-Position zu einer Betriebsposition bewegbar ist, wobei der erste Steuerabschnitt (14) hinter der Lenkstange in Bezug auf die Längsrichtung angeordnet ist, **dadurch gekennzeichnet, dass** sich der erste Steuerabschnitt (14) zumindest teilweise zu einem Punkt erstreckt, der im Wesentlichen auf demselben Niveau der Lenkstange in Bezug auf eine vertikale Richtung in dem Zustand der Benutzung der Lenkstange liegt.

2. Steuervorrichtung nach Anspruch 1, wobei das erste Gangschaltungs-Steuerelement (13) ein Hebel ist, der einen Endabschnitt besitzt, der sich im Wesentlichen quer zu der ersten Ebene erstreckt und den ersten Steuerabschnitt (14) definiert.

3. Steuervorrichtung nach Anspruch 1, wobei die erste Ebene unterhalb der Lenkstange (1) liegt und der erste Steuerabschnitt (14) durch einen sich nach oben erstreckenden Endabschnitt des Hebels definiert ist.

4. Steuervorrichtung nach Anspruch 1, wobei die erste Ebene oberhalb der Lenkstange (1) liegt und der erste Steuerabschnitt (14) durch einen sich nach unten erstreckenden Endabschnitt des Hebels definiert ist.

5. Steuervorrichtung nach einem der Ansprüche 1 - 4, wobei der erste Steuerabschnitt (14) an einer Position so angeordnet ist, dass er durch Drücken nach vorne mit dem Daumen einer Hand, die die Lenkstange (1) ergreift, betätigt werden kann.

6. Steuervorrichtung nach einem der vorhergehenden Ansprüche, wobei der erste Steuerabschnitt (14) so angepasst ist, um zu seiner Ruheposition, nachdem dieser betätigt worden ist, zurückzukehren.

7. Steuervorrichtung nach Anspruch 6, wobei das erste Gangschaltungs-Steuerelement (13) ein Löseelement ist, das so angepasst ist, um einen Lösemechanismus, der durch den Halter (4) getragen ist, zu steuern.

8. Steuervorrichtung nach Anspruch 6, wobei das erste Gangschaltungs-Steuerelement (13) einen Schalter steuert, der einen Teil einer elektronischen Gangschaltung bildet.

9. Steuervorrichtung nach Anspruch 1, wobei das zweite Gangschaltungs-Steuerelement (11) ein Hebel ist, der einen Endabschnitt besitzt, der einen zweiten Steuerabschnitt definiert, der nach vorne in der Längsrichtung des Fahrrads von einer Ruheposition zu einer Betriebsposition bewegbar ist.

10. Steuervorrichtung nach Anspruch 9, wobei die zweite Ebene unterhalb der Lenkstange liegt.

11. Steuervorrichtung nach Anspruch 10, wobei der zweite Steuerabschnitt (12) auch unterhalb der Lenkstange (1) bewegbar ist.

12. Steuervorrichtung nach Anspruch 9, wobei die zweite Ebene oberhalb der Lenkstange (1) liegt.

13. Steuervorrichtung nach Anspruch 12, wobei der zweite Steuerabschnitt (12) auch oberhalb der Lenkstange (1) bewegbar ist.

14. Steuervorrichtung nach Anspruch 3, wobei das zweite Gangschaltungs-Steuerelement (11) ein zweiter Hebel (11) ist, der in einer Ebene schwenkbar ist, die unterhalb der Lenkstange (1) liegt, und einen Endabschnitt besitzt, der einen zweiten Steuerabschnitt (12) definiert, der nach vorne in der Längsrichtung des Fahrrads von einer Ruheposition zu einer Betriebsposition bewegbar ist, wobei der zweite Steuerabschnitt (12) durch einen sich nach oben erstreckenden Endabschnitt des zweiten Hebels definiert ist.

15. Steuervorrichtung nach Anspruch 4, wobei das zweite Gangschaltungs-Steuerelement (11) ein zweiter Hebel (11) ist, der in einer Ebene schwenkbar ist, die oberhalb der Lenkstange (1) liegt, und einen Endabschnitt besitzt, der einen zweiten Steuerabschnitt (12) definiert, der nach vorne in der Längsrichtung des Fahrrads von einer Ruheposition zu einer Betriebsposition bewegbar ist, wobei der zweite Steuerabschnitt (12) durch einen sich nach unten erstreckenden Endabschnitt des zweiten Hebels definiert ist.

16. Steuervorrichtung nach Anspruch 14 oder 15, wobei das zweite Gangschaltungs-Steuerelement (11) einen Schalter steuert, der einen Teil einer elektronischen Gangschaltung bildet.

17. Steuervorrichtung nach Anspruch 9, wobei der zweite Steuerabschnitt (12) an einer Position so angeordnet ist, dass er durch Drücken davon nach vorne mit dem Daumen einer Hand, die die Lenkstange (1) ergreift, betätigt werden kann.

18. Steuervorrichtung nach Anspruch 17, wobei die Steuerabschnitte (12, 14) des ersten und des zweiten Gangschaltungs-Steuerelements (11, 13) an Positionen so angeordnet sind, dass sie beide durch Drücken davon mit dem Daumen einer Hand, die die Lenkstange ergreift, betätigt werden können, und so, dass der Daumen von einem Steuerabschnitt zu dem anderen ohne das Erfordernis, die Position der Hand an der Lenkstange zu verändern, schalten kann.

19. Steuervorrichtung nach Anspruch 9, wobei der zweite Steuerabschnitt (12) so angepasst ist, um zu seiner Ruheposition zurückzukehren, nachdem er betätigt worden ist.

20. Steuervorrichtung nach Anspruch 9, wobei sowohl der erste als auch der zweite Steuerabschnitt (14, 12) so angepasst sind, um zu deren Ruheposition zurückzukehren, nachdem sie betätigt worden sind, wobei der erste und der zweite Steuerabschnitt (14, 12) Schalter steuern, die einen Teil einer elektronischen Gangschaltung bilden.

21. Steuervorrichtung nach Anspruch 20, wobei die Schalter durch den Halter (4) getragen sind.

22. Steuervorrichtung nach Anspruch 1, wobei das erste und das zweite Gangschaltungs-Steuerelement (13, 11) einen Fahrrad-Umwerfer steuern, der ein Schalten einer Fahrradkette auf einem Fahrrad-Mehrfach-Kettenrad oder auf einer Kettenkranz-Anordnung steuert.

23. Steuervorrichtung nach Anspruch 22, wobei das erste und das zweite Gangschaltungs-Steuerelement (13, 11) einen hinteren Fahrrad-Umwerfer steuern.

24. Steuervorrichtung nach Anspruch 22, wobei das erste und das zweite Gangschaltungs-Steuerelement (13, 11) einen vorderen Fahrrad-Umwerfer steuern.

25. Steuervorrichtung nach Anspruch 22, wobei das erste und das zweite Gangschaltungs-Steuerelement den Umwerfer über einen Betätigungsmechanismus steuern, der durch den Halter (4) getragen ist und mit dem Umwerfer über ein flexibles Kabel verbunden ist.

26. Steuervorrichtung nach einem der vorherigen Ansprüche, **dadurch gekennzeichnet, dass** in dem Halter (4) ein Halter für ein schwenkbares Befestigen eines Bremsen-Betätigungshebels (6) integriert ist.

27. Steuervorrichtung nach Anspruch 22, wobei das erste Gangschaltungs-Steuerelement (13) Bewegungen des Umwerfers steuert, was ein Verschieben der Fahrradkette zu kleineren Kettenrädern oder Kettenkränzen hin bewirkt.

28. Steuervorrichtung nach Anspruch 1, wobei das zweite Gangschaltungs-Steuerelement (11) einen zweiten Steuerabschnitt (12) besitzt, der sich in einer Ebene erstreckt, die in Bezug auf die Ebene geneigt ist, in der sich der erste Steuerabschnitt (14) erstreckt.

29. Steuervorrichtung nach Anspruch 28, wobei sich der erste Steuerabschnitt (14) in einer Ebene erstreckt, die im Wesentlichen parallel zu der Lenkstange (1) liegt.

30. Steuervorrichtung nach Anspruch 1, wobei der erste Steuerabschnitt (14) unmittelbar hinter der Lenkstange (1) angeordnet ist.

31. Integrierte Gangschaltungs- und Bremssteuereinheit für ein Fahrrad, wobei sie eine Vorrichtung nach einem der vorhergehenden Ansprüche umfasst.

32. Fahrrad-Lenkstange, die im Wesentlichen gerade Endabschnitte besitzt, die im Wesentlichen entlang einer Richtung orthogonal zu der Symmetrieebene der Lenkstange ausgerichtet sind, wobei die Lenkstange mit einer Steuervorrichtung nach einem der Ansprüche 1-30 versehen ist, die benachbart einem der Endabschnitte der Lenkstange montiert ist.

33. Fahrrad-Lenkstange nach Anspruch 32, wobei zwei Steuervorrichtungen, wie sie in irgendeinem der Ansprüche 1-30 angegeben sind, benachbart den Endabschnitten der Lenkstange, jeweils zum Steuern des hinteren Umwerfers und des vorderen Umwerfers eines Fahrrads, vorgesehen sind.

34. Fahrrad, **dadurch gekennzeichnet, dass** es eine Steuervorrichtung nach einem der Ansprüche 1 - 30 umfasst.

## Revendications

1. Dispositif de commande de changement de vitesses pour une bicyclette possédant un guidon (1), comprenant un support (4) qui peut être fixé sur le guidon (1), un premier élément de commande de changement de vitesses (13) et un second élément de commande de changement de vitesses (11), lesdits premier et second éléments de commande de changement de vitesses (13, 11) étant montés, de façon pivotante, sur ledit support (4) et étant mobiles dans des premiers et second plans respectifs qui sont sensiblement parallèles au guidon (1), dans lequel le premier élément de commande de changement de vitesses (13) possède une première partie de commande (14) qui, dans l'état monté dudit dispositif sur ledit guidon, est mobile vers l'avant dans la direction longitudinale de la bicyclette à partir d'une position de repos vers une position fonctionnelle, ladite première partie de commande (14) étant agencée derrière le guidon par rapport à ladite direction longitudinale, **caractérisé en ce que** ladite première partie de commande (14) s'étend au moins partiellement vers un point se trouvant sensiblement au même niveau du guidon par rapport à une direction verticale dans la condition d'utilisation du guidon.

2. Dispositif de commande selon la revendication 1, dans lequel ledit premier élément de commande de changement de vitesses (13) est un levier possédant une partie d'extrémité s'étendant sensiblement de façon transversale audit premier plan et définissant ladite première partie de commande (14).

3. Dispositif de commande selon la revendication 1, dans lequel ledit premier plan s'étend en dessous du guidon (1), et ladite première partie de commande (14) est définie par une partie d'extrémité s'étendant vers le haut dudit levier.

4. Dispositif de commande selon la revendication 1, dans lequel ledit premier plan s'étend au dessus du guidon (1), et ladite première partie de commande (14) est définie par une partie d'extrémité s'étendant vers le bas dudit levier.

5. Dispositif de commande selon l'une quelconque des revendications 1 à 4, dans lequel ladite première partie de commande (14) est agencée sur une position telle qu'elle peut être actionnée en la poussant vers l'avant à l'aide du pouce d'une main saisissant le guidon (1).

6. Dispositif de commande selon l'une quelconque des revendications précédentes, dans lequel ladite première partie de commande (14) est adaptée pour revenir sur sa position de repos après avoir été actionnée.

7. Dispositif de commande selon la revendication 6, dans lequel ledit premier élément de commande de changement de vitesses (13) est un élément de libération adapté pour commander un mécanisme de retour porté par ledit support (4).

8. Dispositif de commande selon la revendication 6, dans lequel ledit premier élément de commande de changement de vitesses (13) commande un commutateur faisant partie d'un moyen électronique de changement de vitesses.

9. Dispositif de commande selon la revendication 1, dans lequel ledit second élément de commande de changement de vitesses (11) est un levier possédant une partie d'extrémité définissant une seconde partie de commande mobile vers l'avant dans la direction longitudinale de la bicyclette à partir d'une position de repos vers une position opérationnelle.

10. Dispositif de commande selon la revendication 9, dans lequel ledit second plan s'étend en dessous du guidon.

11. Dispositif de commande selon la revendication 10, dans lequel la seconde partie de commande (12) est mobile, de même, en dessous du guidon (1).

12. Dispositif de commande selon la revendication 9, dans lequel ledit second plan s'étend au dessus du guidon (1).

13. Dispositif de commande selon la revendication 12, dans lequel la seconde partie de commande (12) est mobile, de même, au dessus du guidon (1).

14. Dispositif de commande selon la revendication 3, dans lequel ledit second élément de commande de changement de vitesses (11) est un second levier (11) pouvant pivoter dans un plan s'étendant en dessous du guidon (1) et possédant une partie d'extrémité définissant une seconde partie de commande (12) mobile vers l'avant dans la direction longitudinale de la bicyclette d'une position de repos vers une position opérationnelle, ladite seconde partie de commande (12) étant définie par une partie d'extrémité s'étendant vers le haut dudit second levier.

15. Dispositif de commande selon la revendication 4, dans lequel ledit second élément de commande de changement de vitesses (11) est un second levier (11) pouvant pivoter dans un plan s'étendant au dessus du guidon (1) et possédant une partie d'extrémité définissant une seconde partie de commande (12) mobile vers l'avant dans la direction longitudinale de la bicyclette d'une position de repos vers une position opérationnelle, ladite seconde partie de commande (12) étant définie par une partie d'extrémité s'étendant vers le bas dudit second levier.

16. Dispositif de commande selon la revendication 14 ou 15, dans lequel ledit second élément de commande de changement de vitesses (11) commande un commutateur faisant partie d'un moyen électronique de changement de vitesses.

17. Dispositif de commande selon la revendication 9, dans lequel ladite seconde partie de commande (12) est agencée sur une position telle qu'elle peut être actionnée en la poussant vers l'avant à l'aide du pouce de la main saisissant le guidon (1).

18. Dispositif de commande selon la revendication 17, dans lequel les parties de commande (12, 14) desdits premier et second éléments de commande de changement de vitesses (11, 13) sont agencées sur des positions telles qu'elles peuvent être actionnées toutes deux en les poussant vers l'avant à l'aide du pouce d'une main saisissant le guidon, et telles que le pouce peut commuter d'une partie de commande à l'autre sans devoir modifier la position de la main sur le guidon.

19. Dispositif de commande selon la revendication 9, dans lequel ladite seconde partie de commande (12) est prévue pour revenir sur sa position de repos après son actionnement.

20. Dispositif de commande selon la revendication 9, dans lequel l'ensemble desdites première et seconde parties de commande (14, 12) sont adaptées pour revenir sur leur position de repos après leur actionnement, lesdites première et seconde parties de commande (14, 12) commandant des commutateurs faisant partie d'un moyen électronique de changement de vitesses.

21. Dispositif de commande selon la revendication 20, dans lequel lesdits commutateurs sont portés par ledit support (4).

22. Dispositif de commande selon la revendication 1, dans lequel lesdits premier et second éléments de commande de changement de vitesses (13, 11) commandent un dérailleur de bicyclette qui commande la commutation d'une chaîne de bicyclette sur un assemblage de plateaux ou de pignons multiples de bicyclette.

23. Dispositif de commande selon la revendication 22, dans lequel lesdits premier et second élément de commande de changement de vitesses (13, 11) commandent un dérailleur arrière de bicyclette.

24. Dispositif de commande selon la revendication 22, dans lequel lesdits premier et second élément de commande de changement de vitesses (13, 11) commandent un dérailleur avant de bicyclette.

25. Dispositif de commande selon la revendication 22, dans lequel lesdits premier et second élément de commande de changement de vitesses commandent ledit dérailleur par l'intermédiaire d'un mécanisme formant actionneur porté par ledit support (4) et connecté au dérailleur au moyen d'un câble flexible.

26. Dispositif de commande selon l'une quelconque des revendications précédentes, **caractérisé en ce que**, dans ledit support (4), est intégré un support pour monter, de façon pivotante, un levier d'actionnement de frein (6).

27. Dispositif de commande selon la revendication 22, dans lequel ledit premier élément de commande changement de vitesses (13) commande les déplacements dudit dérailleur provoquant le décalage de la chaîne de bicyclette vers de plus petits pignons ou plateaux.

28. Dispositif de commande selon la revendication 1, dans lequel le second élément de changement de vitesses (11) possède une seconde partie de commande (12) s'étendant dans un plan qui est incliné par rapport au plan dans lequel la première partie de commande (14) s'étend.

29. Dispositif de commande selon la revendication 28, dans lequel ladite première partie de commande (14) s'étend dans un plan qui est sensiblement parallèle au guidon (1).

30. Dispositif de commande selon la revendication 1, dans lequel ladite première partie de commande (14) est positionnée immédiatement derrière le guidon (1).

31. Unité intégrée de changement de vitesses et de commande de frein pour une bicyclette, dans laquelle est inclus un dispositif selon l'une quelconque des revendications précédentes.

32. Guidon de bicyclette, possédant des parties d'extrémité sensiblement droites et sensiblement alignées le long d'une direction orthogonale au plan de symétrie du guidon, dans lequel ledit guidon est muni d'un dispositif de commande sur l'une quelconque des revendications 1 à 30 monté adjacent à une des parties d'extrémité du guidon.

33. Guidon de bicyclette selon la revendication 32, dans lequel deux dispositifs de commande comme énoncé dans l'une quelconque des revendications 1 à 30 sont fournis adjacents auxdites parties d'extrémité du guidon, pour commander respectivement le dérailleur arrière et le dérailleur avant d'une bicyclette.

34. Bicyclette, **caractérisée en ce qu'**elle comprend un dispositif de commande selon l'une quelconque des revendications 1 à 30.
